# EUROPEAN PATENT SPECIFICATION

(11) **EP 1 206 954 B1**
(45) Date of publication and mention of the grant of the patent: **17.05.2006**
(21) Application number: 01302958.2
(22) Date of filing: 29.03.2001
(51) Int. Cl.: A63F 13/12

(54) **Game machine, server system, information service method and recording medium**
Spielmaschine, Serversystem, Informationsdienstverfahren und Aufzeichnungsmedium
Appareil de jeu, système de serveur, procédé de service d'information et support d'enregistrement

(30) Priority: 17.11.2000 JP 2000351909
(43) Date of publication of application: 22.05.2002
(73) Proprietor: Kabushiki Kaisha Square Enix (also trading as Square Enix Co., Ltd.), Tokyo 151-8544 (JP)
(72) Inventor: Maehiro, Kazutoyo, c/o Square Enix Co.,Ltd., Tokyo 155-8544 (JP)
(74) Representative: Grünecker, Kinkeldey, Stockmair & Schwanhäusser Anwaltssozietät

(56) References cited:
- WO-A-00/29084
- WO-A-00/44458
- WO-A-95/31061
- US-A- 6 119 229

## Description

The present invention relates to a (video) game machine that is connectable to an information service system such as a server via a communications network, and preferably applicable to receiving various information services from the server, and also relates to an information service system, an information service method and a recording medium associated with the video game machine.

As a communications network such as the Internet becomes popular, online games are started which have a video game machine connected to a server connected to the Internet to carry out games using game related information provided by the server.

The online games include games a user plays individually, and games a group of users participate in like competing games.

An example for a computer network architecture for playing multi-user games over a network is given in WO95/31061. Multiple remote players are linked to a server to enable playing real-time games. Moreover, the controller input of players throughout the course of a game is completely recorded. It can be downloaded by every other player for replay purposes.

To play an online game in which a group of users participate, users decide a date for the game by telephone or E-mail.

Accordingly, the users playing the game together are usually limited to familiar friends. Although it will also be possible to look for parties in a chat room (electronic forum) on the Internet, they are not always successfully found.

Therefore, an object of the present invention is to provide a game machine, a server system, an information service method and a recording medium allowing a user to look for peer users easily to share an information service with them such as in an online game.

This is achieved by the features of the independent claims.

According to the present invention, since the video game machine allows its user to obtain personal information on other users, the user can look for users connected to the information service system easily.

The above and other objects, features and advantages of the present invention will become more apparent from the following description of embodiments thereof taken in conjunction with the accompanying drawings.
Fig. 1 is a block diagram showing a configuration of an embodiment of a system in accordance with an aspect of the present invention;
Fig. 2 is a diagram illustrating the content of the information processing of the embodiment in accordance with an aspect of the present invention;
Fig. 3 is a flowchart illustrating the content of the information processing on a server side according to an aspect of the present invention;
Fig. 4 is a flowchart illustrating the content of the information processing on the profile server side according to an aspect of the present invention;
Fig. 5 is a flowchart illustrating the content of the information processing on a client side according to an aspect of the present invention; and
Fig. 6 is a diagram illustrating an example of a display screen on the client side according to an aspect of the present invention.

An embodiment of the present invention will now be described in detail with reference to the accompanying drawings.

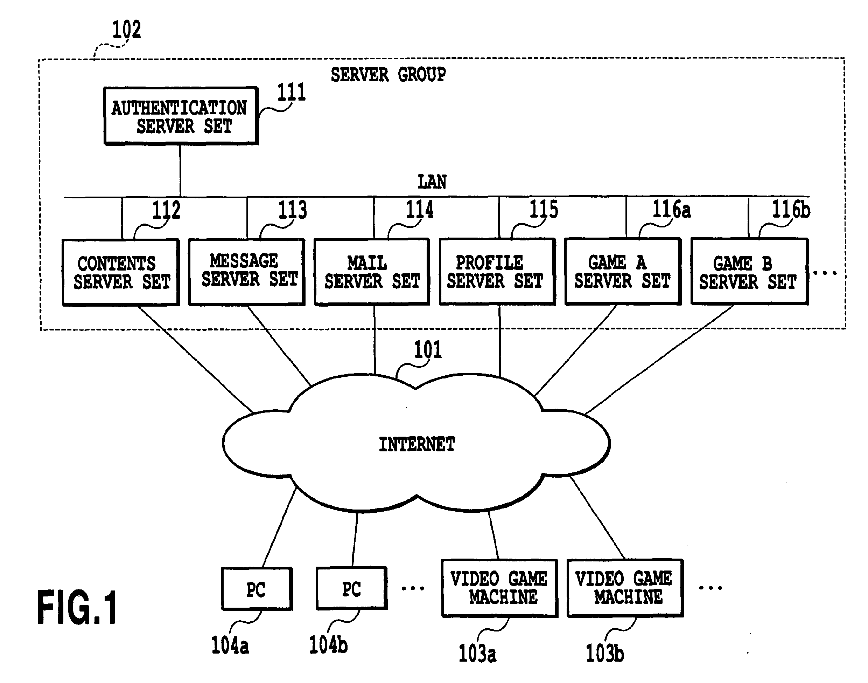

Fig. 1 shows a configuration of an entire network system of the present embodiment. In Fig. 1, the network system comprises a communications network 101, a server group 102 of a provider, and clients 103a, 103b, 104a and 104b, for example, connectable to the server group 102 via the communications network 101 to be used by a group of users. The server group 102, and the clients 103a, 103b, 104a and 104b each consist of a computer system.

The server group 102 has its internal servers cooperate to provide various information services. An information service system consisting of a set of the servers in the server group 102 is installed in various countries all over the world, configuring the server group 102. The information service system includes authentication servers 111, contents servers 112, message servers 113, mail servers 114, game A servers 116a, game B servers 116b and profile servers 115. The authentication servers 111 manage accounts of member users (user IDs (identifiers)) and passwords. The authentication servers 111 can also manage the connection states (online/offline) of the users and the addresses of the client machines of the users in the online state. The contents servers 112 provide various pieces of information about sports, music, comics, shopping and the like.

The message servers 113 provide an environment for real-time message exchanges between users. Specifically, they provide an environment for the users to activate a messenger application and chatting application on the client machine. The message servers 113 also perform routing (establish destinations and routes) for delivering messages exchanged by the messenger application and chatting messages of the chatting application.

The mail servers 114 provide an E-mail exchange service between users.

The game A servers 116a and game B servers 116b provide online games. The user activates an online game in the game server from a viewer to play it. For example, if the online game is a role-playing game (game in which the user participates as a character of the game), he or she can play the role-playing game with other member users.

The profile servers 115 store a status file in a memory to manage for each user's account the profile of the user associated with the account, and status information, short messages and the like, which will be described later. Using the viewer the user can record to the profile server 115 his or her own profile, a short message and information indicating whether the user is a child.

The clients 103a and 103b may be a home video game machine such as a PlayStation II (trade mark) of Sony Corp. The clients 104a and 104b may be a general purpose personal computer (called PC from now on). The clients can load programs that relate to the present invention and will be described later from a recording medium such as a CDROM, and execute them. The clients 103a, 103b, 104a or 104b will be simply referred to as a client below.

The communications network 101 interconnects the server group 102 and the clients 103a, 103b, 104a and 104b and the like. The present embodiment supposes the Internet as the communications network 101 that can use such common protocols as TCP/IP (transmission control protocol/Internet protocol), HTTP (hypertext transfer protocol), SMTP(simple mail transfer protocol) and FTP(file transfer protocol) for the data transfer.

In the present embodiment, the description is made when the client is the home video game machine 103a.

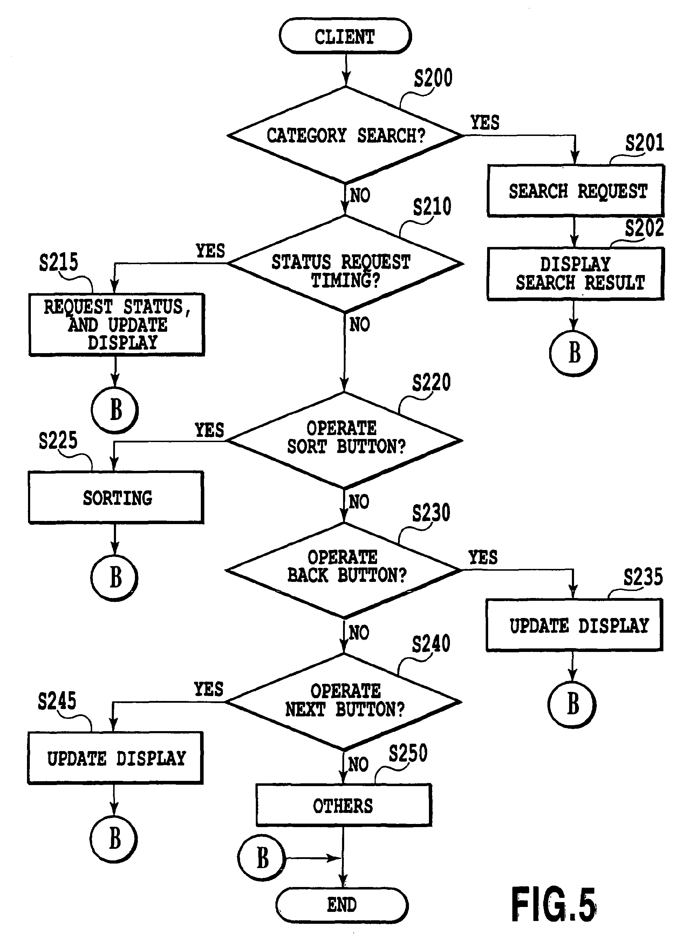

The client 103a comprises at least a main unit of the game machine, a television set, a CDROM driver and a controller. The main unit of the game machine activates the viewer, and accesses the server group 102. The television set outputs video and sound data supplied from the main unit of the game machine. The controller supplies the main unit of the game machine with a command from the user. The viewer is installed from the CDROM to the main unit of the game machine. In the present embodiment, the viewer incorporates the program of Fig. 5 so that the CPU in the main unit of the game machine executes the program, thereby carrying out the information processing of the present invention.

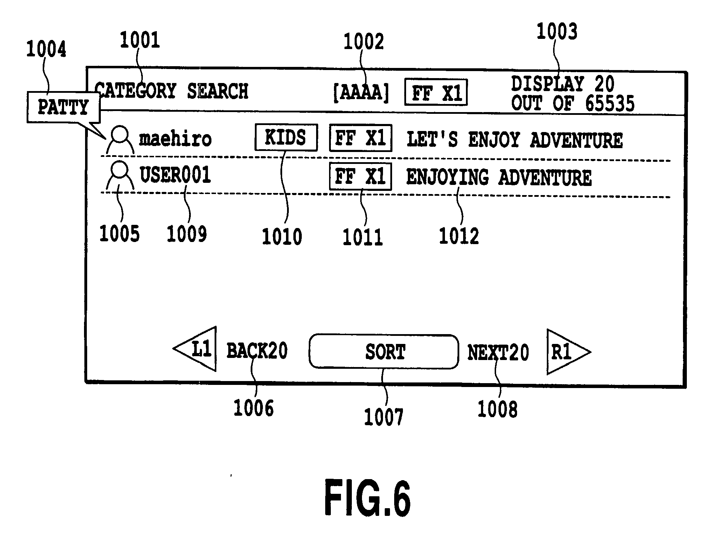

More specifically, the user can find the status (utilization status) of other member users of the information service system on the display screen of Fig. 6 using the game machine 103a. Each status indicates whether the member user is connected to the information service system, and when connected, the type of the information service used, and whether he or she is a child or not.

It is also possible to limit the users whose status are to be reported. In this case, each user records the names of other users whose status he or she wishes to be notified of from his or her client to the profile server 115. The file listing the names of the registered users is prepared for each user. In the present embodiment, the file is called a friend list.

In contrast, the names of other users whose status the user does not wish to be notified of can also be recorded from the client to the profile server 115 in the present embodiment. The file of the user names registered in this way is called a black list in the present embodiment. The black list is also prepared for each user.

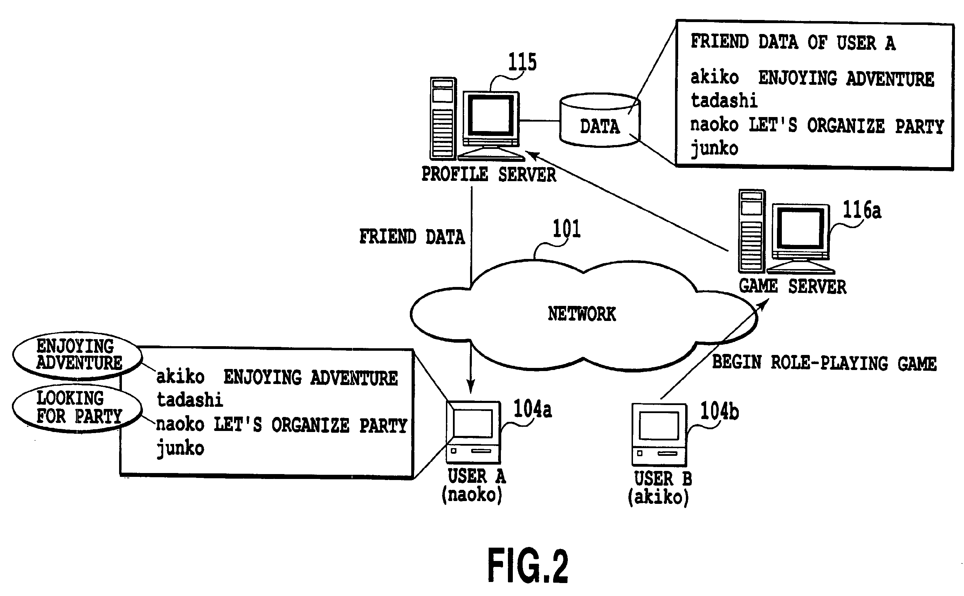

Taking account of the foregoing explanation, a reporting method of the status of other users will be described with reference to Fig. 2.

Assume that a user B whose name is "akiko" accesses the information service using the client 104b. After authenticating the user ID and the password, the authentication server 111 permits the access to the game server 116a. When the user B accesses the game server 116a through the client 104b, and starts a role-playing game, the game server 116a supplies the profile server 115 with the name of the user who starts the game ("akiko" in this case), the game name and the status, that is, the status information that indicates the start of the game in this case. The user name and the status information are stored in the profile data memory area along with the user name "akiko".

When the user name "akiko" is recorded in the friend list of the client of a user A (user name "naoko"), the profile server 115 regularly transmits the client's status recorded in the friend list to the client A. Accordingly, as illustrated in Fig. 2, a message "enjoying adventure" indicating that "akiko" starts the game is displayed on the right of the user name [akiko] on the screen of the client A. The message "enjoying adventure" is a message assigned to a particular game, and when the user B starts another game, a message indicating its content is displayed instead. The message is prepared by the profile server 115, and is sent from the profile server 115 to the client 104a. The message on the upper left of the user name is a message the user of the client gives, which is called a short message in the present specification.

Thus, when the user B with the user name ("akiko"), whom the user A selects and records in the friend list, accesses the information service system through the client, the name of the information service the user B utilizes is displayed on the screen of the client A.

In this system, since the user's own status information is also sent from the profile server 115 to the client 104a along with his or her status information and the short message, the client 104a displays the status information and short message.

Likewise, the client 104b of the user B displays on its screen the status information of the clients of the users recorded in the friend list.

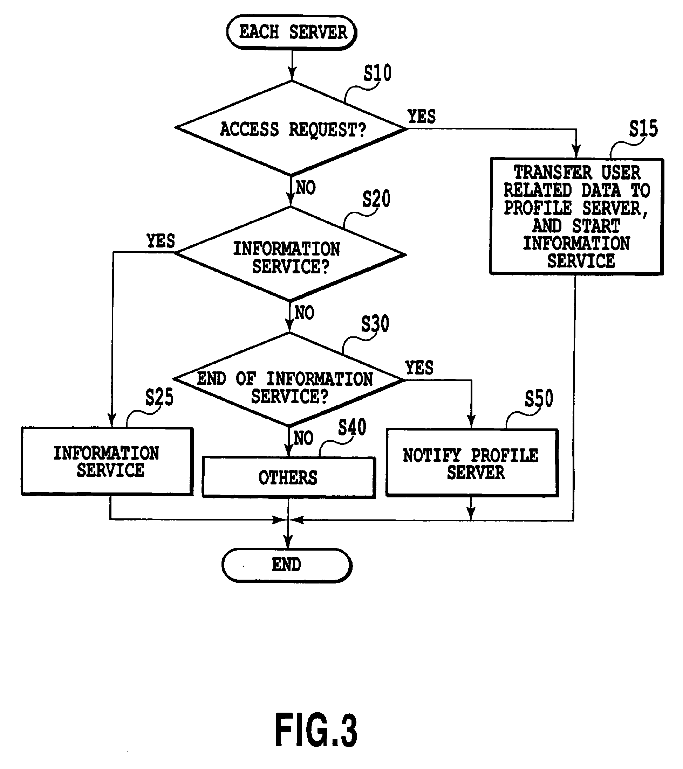

Figs. 3 to 5 illustrate the contents of the information processing of the game server (an example of a server that provides the information service), the profile server and the client for executing such information processing, respectively.

The procedures as illustrated in Figs. 3 to 5 are stored in hard disks in the apparatuses in the form of an object typified by a markup language document such as a computer executable program, script, or HTML document, so that they are loaded in the system memories to be executed by the CPUs. Here, the program refers to an object described in a machine language a CPU can execute straightforwardly. The script refers to an object that defines the contents of the information processing so that the CPU can execute the contents through an interpreter, a program for translating the script into a machine language. The markup language document is analyzed by a program called a browser that executes operation instructions (called a "tag") defined in the markup language document.

Next, taking an example of the game server 116a, the operation of the server providing the information service will be described with reference to Fig. 3.

Receiving a first access request from a client (step S10), the game server 116a transfers to the profile server 115 the client name and information service name, the type name of the online game in this case, which are sent from the client. Subsequently, it starts the designated information service (S15).

During the communications for the information service, the game server 116a repeats the procedure of start → step S10 → S20 → S25 → END as in the conventional information service, thus, providing an online game for a group of users. When the information service is completed, information indicating the completion is sent to the profile server 115 (step S30 → S50). Here, the step S25 is a step to provide various information services. The step S30 is a step for determining whether an instruction or data related to the information service is inputted. The processing except for the above is performed in a step S40.

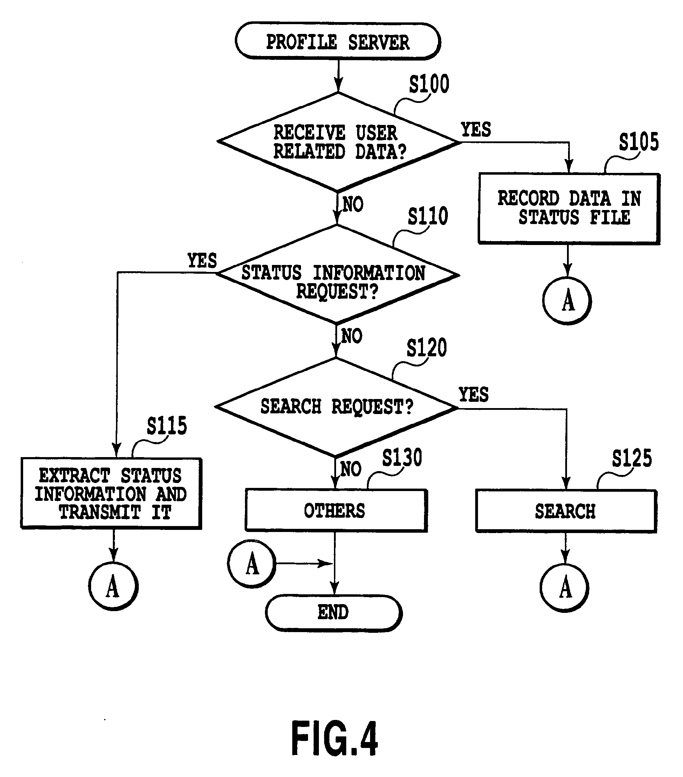

The processing of the profile server 115 will now be described with reference to Fig. 4.

Iterating the procedure as illustrated in Fig. 4, the profile server 115 waits for information received from the information providing server or the client of the user. When the status information and user name are sent from the information providing server, the profile server 115 writes the status information into the status information memory area (status file) corresponding to the user name (step S100 → S105).

The client of the user transmits a status information request at fixed intervals while it is connected to the information service system. Receiving the request, the profile server 115 extracts the status information, short message and the like from the user list corresponding to the user name of the client, and transmits them to the client that sent the request (step S110 → 115). The processing except for the above is performed in a step S130.

In the present embodiment, a user search function is provided by the profile server 115. To achieve it, receiving a category such as a name of a particular online game as a search condition from the client of the user, the profile server 115 searches status information of all the users, and transmits the status information meeting the search condition given by the client that sent the search request to that client. The search results include the number of users satisfying the search condition. Although it will be described later, when the user status information obtained as the search result exceeds a predetermined number, say 20, the status information is sent to the client 20 pieces of information at a time in response to the request from the client side (step S120 → S125). Here, the status information associated with user names listed in the black list is removed from the transmitted information.

The operation of the client side will now be described with reference to the Fig. 5.

On the client side, an internal timer or the like continues to count 10 second intervals after the connection of the information service system, so that the status information request is sent to the profile server 115 at every 10 seconds interval. In response to the request, the profile server 115 sends the user status information described in the friend list. Thus, the client displays the status information on its screen (step S210 → S215).

An example of the display is illustrated in Fig. 6. Note that Fig. 6 illustrates the status information on the search screen of the user. In Fig. 6, the reference numeral 1005 designates an icon indicating whether the client is connected to the information service or not by different shapes of the icon. The reference numeral 1009 designates the user name; 1010 designates information indicating a child; 1011 designates the type of the information service, the name of the online game, here; and 1012 designates a status (operation state).

The user inputs the category using a search condition input screen not shown. For example, when the user inputs a particular online game as the category (YES in step S200), the client sends the inputted information as a request for search to the profile server 115 (step S201). The profile server 115 sends the user status information associated with the input category back to the client that sent the search request. Then, the client displays the status information in the fashion as illustrated in Fig. 6 (step S202).

The display screen of Fig. 6 will be described briefly. The reference numeral 1001 designates an area for displaying the category search condition. 1002 designates a category type; 1003 designates the number of users satisfying the search condition; and 1004 designates a short message, a message registered by the user with the user name displayed.

**(TABLE 1)**

| ID | utilization states | short messages |
|---|---|---|
| 1 | Let's enjoy adventure | party |
| 2 | enjoying adventure | enjoying adventure |
| 3 | item is on sale | item sell |

On the client side, the short message corresponding to the user utilization state is set in advance as shown in Table 1, so that the user can find the utilization state at a glance.

In response to the utilization states of the individual users sent from the server side, the short messages corresponding to the utilization states are displayed on the side of the user names in the form of icon (e.g., balloon) as illustrated in Fig. 6.

Although the message "Let's enjoy adventure" has one-to-one correspondence with the word [party] in Fig. 6, other phrases of the same meaning as the message "Let's enjoy adventure" can be used such as "looking for participants" and "standby adventure" in correspondence to the word [party]. Likewise, a single short message can correspond to a group of utilization states of the same meaning.

It is also possible for the server side to record correspondence between the "utilization states (objects)" and the short messages in advance, so that the short messages can also be transmitted from the server to the client as the personal information. In this way, the client can display the short messages without setting them by itself.

Thus, in the present embodiment, the profile server has a friend list registered by each user, which includes personal information of his or her friends.

The personal information, which includes the utilization states of the information server, is transferred from the information server to the profile server when the utilization state varies, so that the personal information is updated. The profile data is regularly transmitted to the client.

The client can check the condition of each friend on the screen. In this case, displaying the short message the user registered in advance according to the "object" can facilitate checking the conditions of the friends.

The reference numeral 1005 designates an icon indicating whether the user is registered (connected) to the information service system, in which different icons are displayed depending on whether the connection is established or not. The images of the icons are prepared on the client side, so that the client can select the icon to be displayed in response to the status information sent from the profile server 115.

The reference numeral 1009 designates a user name of a member of the information service system. 1011 designates an information service name in use. The reference numeral 1010 designates an icon showing that the user is a child and 1012 designates the operation state of the client of the user.

The reference numeral 1006 designates a button (called "BACK button" from now on) for returning the display of the search result to a preceding screen. 1007 designates a sort button for rearranging the search results so that the display is rearranged in each predetermined field in response to the manipulation of the button. 1008 designates a button (called NEXT button from now on) to proceed to the next search result screen.

In this configuration, in response to the search condition the user sends to the profile server 115, the profile server 115 transmits the short message, information about connection/disconnection to the information service system, information on whether the user is a child or not, and the message indicating the operation state to the client as the status information satisfying the search condition, so that they are displayed on the client as illustrated in Fig. 6.

When the user manipulates the sort button 1007, the sort instruction is sent from the client to the profile server 115, so that the profile server 115 carries out the sorting and sends the results back to the client. The client displays the sorting result on its screen (step S220 → S225).

When the user manipulates the BACK button 1006, the request for the preceding 20 pieces of the status information in the search result is sent from the client to the profile server 115, so that the status information is sent to the client. The client displays the status information on its screen (step S230 → S235).

When the user manipulates the NEXT button 1008, the request for the next 20 pieces of the status information in the search result is sent from the client to the profile server 115, so that the status information is sent to the client. The client displays the status information on its screen (step S240 → S245). Processing excepting for the above is performed in a step S250.

Besides the foregoing embodiment, the following configuration can be implemented.
1) Although the foregoing embodiment uses the online game as the information service, the information service is not limited to the online game.
2) Although when a great number of pieces of the status information is present in the foregoing embodiment, a specific number of pieces is sent from the profile server to the client, the entire search result can be transmitted to the client.
3) The notification of the status information can take various shapes such as icons, characters, and figures.
4) The video game machine according to the present invention includes a dedicated video game machine, general-purpose personal computer, mobile phone, mobile information terminal and all other information processing devices available for receiving the information services from the information service system.
5) Although the Internet is supposed as the communications network in the foregoing embodiment, the communications network can include a LAN, public telecommunications network, and other communications networks.
6) The information services provided by the information service system refer to various services such as an online game, chatting (electronic forum), message communication, E-mail, transmitting and receiving services, etc.
7) Although the game server and the like detects the utilization state of the user, and the profile server notifies the client of the utilization state in the foregoing embodiment, the same server can detect the utilization state and notify of it.

In addition to the server-based storage discussed above, peer-based storage could be used, with the profiles being held at clients and interrogated as necessary.

## Claims

1. A server system connected to a group of game machines (103, 104) via a communication network (101) comprising:
an information providing server for providing information to said game machines (103, 104); and
a profile server (115) for storing personal information of at least a user of said game machines (103, 104),
**characterized in that**
said profile server (115) storing a utilization state of said game information of at least a second user selected by a first user in advance as said personal information, wherein said personal information being updated in predetermined intervals, and
said server system transmitting said personal information to the game machine (103, 104) of said first user for display on said game machine (103, 104) of said first user.

2. A game machine connected to a server system (102) via a communication network (101), said server system (102) for providing information to said game machines (103, 104) and storing personal information of at least a user of said game machine (103, 104), said game machine comprising a display
**characterized in that**
said game machine receiving personal information from said server system (102) indicating a utilization state of said game information by at least a second user selected by a first user in advance, said personal information being updated in predetermined intervals, and for displaying said received personal information

3. A game machine according to claim 2, further comprising a setting system that sets a correspondence list used for displaying the utilization state of the information service by the second user in a predetermined format, wherein the utilization state of the information service by the second user is displayed in the predetermined format using the correspondence list.

4. A game machine according to claim 3, wherein the predetermined format comprises icons (1005).

5. A gaming system comprising a server system (102) connected via a communication network (101) to a group of game machines (103, 104), said server system (102) being in accordance with claim 1 and said game machine (103, 104) being in accordance with any of claims 2 to 4.

6. A method for providing personal information of a user of a game machine (103, 104) from a server system (102) over a communication network (101) to a game machine (103, 104) of a another user, comprising the steps of:
providing a game information from said server system (102) to said game machines (103, 104),
storing personal information of at least a user of said game machines (103, 104),
**characterized in that**
a utilization state of said game information of at least a second user selected by a first user in advance is stored as said personal information, wherein said personal information being updated in predetermined intervals, and by the steps of;
transmitting said personal information to the game machine (103, 104) of said first user, and
displaying said transmitted personal information on said game machine (103, 104) of said first user.

## Patentansprüche

1. Serversystem über ein Kommunikationsnetz (101) angeschlossen an eine Gruppe von Spielgeräten (103, 104), umfassend:
einen Informationsbereitstellungsserver zum Bereitstellen von Information an die Spielgeräte (103, 104); und
einen Profilserver (115) zum Speichern persönlicher Information wenigstens eines Benutzers der Spielgeräte (103, 104),
**dadurch gekennzeichnet, dass**
der Profilserver (115) einen Benutzungszustand der Spielinformation wenigstens eines von einem ersten Benutzer vorausgewählten zweiten Benutzers als die persönliche Information speichert, wobei die persönliche Information in vorbestimmten Intervallen aktualisiert wird, und
das Serversystem die persönliche Information zum Spielgerät (103, 104) des ersten Benutzers zur Anzeige an dem Spielgerät (103, 104) des ersten Benutzers überträgt.

2. Spielgerät, über ein Kommunikationsnetz (101) an ein Serversystem (102) angeschlossen, wobei das Serversystem (102) zur Bereitstellung von Information an die Spielgeräte (103, 104) und Speichern von persönlicher Information wenigstens eines Benutzers des Spielgerätes (103, 104) geeignet ist, und das Spielgerät ein Display umfasst,
**dadurch gekennzeichnet, dass**
das Spielgerät persönliche Information vom Serversystem (102) empfängt, die einen Benutzungszustand der Spielinformation durch wenigstens einen von einem ersten Benutzer vorausgewählten zweiten Benutzer angibt, wobei die persönliche Information in vorbestimmten Intervallen aktualisiert wird, und zur Anzeige der empfangenen persönlichen Information.

3. Spielgerät nach Anspruch 2, weiterhin umfassend ein Einrichtungssystem, welches eine Korrespondenzliste einrichtet, die zur Anzeige des Benutzungszustands des Informationsdienstes durch den zweiten Benutzer in einem vorbestimmten Format verwendet wird, wobei der Benutzungszustand des Informationsdienstes durch den zweiten Benutzer in vorbestimmtem Format unter Benutzung der Korrespondenzliste angezeigt wird.

4. Spielgerät nach Anspruch 3, wobei das vorbestimmte Format Piktogramme (1005) umfasst.

5. Spielsystem umfassend ein Serversystem (102), welches über ein Kommunikationsnetz (101) an eine Gruppe von Spielgeräten (103, 104) angeschlossen ist, wobei das Serversystem (102) in Übereinstimmung mit Anspruch 1 und die Spielgeräte (103, 104) in Übereinstimmung mit einem der Ansprüche 2 bis 4 sind.

6. Verfahren zur Bereitstellung von persönlicher Information eines Benutzers eines Spielgerätes (103, 104) von einem Serversystem (102) über ein Kommunikationsnetz (101) zu einem Spielgerät (103, 104) eines anderen Benutzers, umfassend die Schritte:
Bereitstellen einer Spielinformation vom Serversystem (102) an die Spielgeräte (103, 104),
Speichern von persönlicher Information wenigstens eines Benutzers der Spielgeräte (103, 104)
**dadurch gekennzeichnet, dass**
ein Benutzungszustand der Spielinformation wenigstens eines von einem ersten Benutzer vorausgewählten zweiten Benutzers als die persönliche Information gespeichert wird, wobei die persönliche Information in vorbestimmten Intervallen aktualisiert wird, und durch die Schritte
Übertragen der persönlichen Information zum Spielgerät (103, 104) des ersten Benutzers, und
Anzeigen der übertragenen persönlichen Information an dem Spielgerät (103, 104) des ersten Benutzers.

## Revendications

1. Système de serveur relié à un groupe de machines de jeu (103, 104) par l'intermédiaire d'un réseau de communication (101) comprenant :
un serveur d'informations pour fournir des informations auxdites machines de jeu (103, 104) ; et
un serveur de profils (115) pour stocker des informations personnelles d'au moins un utilisateur desdites machines de jeu (103, 104),
**caractérisé en ce que**
ledit serveur de profils (115) stocke un état d'utilisation desdites informations de jeu d'au moins un deuxième utilisateur sélectionné par un premier utilisateur à l'avance en tant que dites informations personnelles, dans lesquelles lesdites informations personnelles sont mises à jour à des intervalles prédéterminés, et
ledit système de serveur transmet lesdites informations personnelles à la machine de jeu (103, 104) dudit premier utilisateur pour affichage sur ladite machine de jeu (103, 104) dudit premier utilisateur.

2. Machine de jeu reliée à un système de serveur (102) par l'intermédiaire d'un réseau de communication (101), ledit système de serveur (102) procurant des informations auxdites machines de jeu (103, 104) et stockant des informations personnelles d'au moins un utilisateur de ladite machine de jeu (103, 104), ladite machine de jeu comprenant un afficheur
**caractérisée en ce que**
ladite machine de jeu reçoit des informations personnelles en provenance dudit système de serveur (102) indiquant un état d'utilisation desdites informations de jeu par au moins un deuxième utilisateur sélectionné par un premier utilisateur à l'avance, lesdites informations personnelles étant mises à jour à des intervalles prédéterminés, et affiche lesdites informations personnelles reçues.

3. Machine de jeu selon la revendication 2, comprenant de plus un système de paramétrage qui paramètre une liste de correspondances utilisée pour afficher l'état d'utilisation du service d'information par le deuxième utilisateur dans un format prédéterminé, dans laquelle l'état d'utilisation du service d'information par le deuxième utilisateur est affiché dans le format prédéterminé en utilisant la liste de correspondances.

4. Machine de jeu selon la revendication 3, dans lequel le format prédéterminé comprend des icônes (1005).

5. Système de jeu comprenant un système de serveur (102) relié par l'intermédiaire d'un réseau de communication (101) à un groupe de machines de jeu (103, 104), ledit système de serveur (102) étant selon la revendication 1 et ladite machine de jeu (103, 104) étant selon l'une quelconque des revendications 2 à 4.

6. Procédé pour fournir des informations personnelles d'un utilisateur d'une machine de jeu (103, 104) en provenance d'un système de serveur (102) sur un réseau de communication (101) à une machine de jeu (103, 104) d'un autre utilisateur, comprenant les étapes consistant à :
fournir des informations de jeu en provenance dudit système de serveur (102) auxdites machines de jeu (103, 104),
stocker des informations personnelles d'au moins un utilisateur desdites machines de jeu (103, 104),
**caractérisé en ce que**
un état d'utilisation desdites informations de jeu d'au moins un deuxième utilisateur sélectionné par un premier utilisateur à l'avance est stocké en tant que dites informations personnelles, dans lesquelles lesdites informations personnelles sont mises à jour à des intervalles prédéterminés, et par les étapes consistant à :
transmettre lesdites informations personnelles à la machine de jeu (103, 104) dudit premier utilisateur, et
afficher lesdites informations personnelles transmises sur ladite machine de jeu (103, 104) dudit premier utilisateur.
